# EUROPÄISCHE PATENTSCHRIFT

(11) **EP 2 909 593 B1**
(45) Veröffentlichungstag und Bekanntmachung des Hinweises auf die Patenterteilung: **21.02.2018**
(21) Anmeldenummer: 13771090.1
(22) Anmeldetag: 23.09.2013
(51) Int. Cl.: G01K 1/08, G01K 1/14, G01K 7/16, G01K 7/18, G01F 1/684, G01F 1/69, G01F 1/692, G01F 1/698, G01F 15/02, G01F 15/14, G01D 11/24

(54) **TEMPERATURSENSOR UND THERMISCHES DURCHFLUSSMESSGERÄT**
TEMPERATURE SENSOR AND THERMAL FLOW RATE MEASUREMENT DEVICE
CAPTEUR DE TEMPÉRATURE ET DÉBITMÈTRE THERMIQUE

(30) Priorität: 19.10.2012 DE 202012104039 U; 29.07.2013 DE 202013103404 U
(43) Veröffentlichungstag der Anmeldung: 26.08.2015
(73) Patentinhaber: Endress+Hauser Flowtec AG, 4153 Reinach (BL) (CH)
(72) Erfinder: GRÜN, Alexander, 79539 Lörrach (DE); SCHULTHEIS, Hanno, 79539 Lörrach (DE); BAUR, Tobias, CH-4145 Reinach (CH)
(74) Vertreter: Andres, Angelika Maria
(86) Internationale Anmeldenummer: PCT/EP2013/069680
(87) Internationale Veröffentlichungsnummer: WO 2014/060186

(56) Entgegenhaltungen:
- EP-A1- 1 757 916
- DE-A1- 19 504 608
- DE-C1- 19 832 533
- DE-U1-202009 011 309
- JP-A- H11 351 975
- US-A- 5 695 110
- US-B2- 7 293 457

## Beschreibung

Die Erfindung betrifft einen Temperatursensor sowie ein thermisches Durchflussmessgerät

Es sind Sensoren für Durchflussmessgeräte bekannt, welche nach dem thermischen Messprinzip arbeiten. Dieses Messprinzip beruht auf der Abkühlung eines beheizten Widerstandsthermometers, nachfolgend auch als heizendes und messendes oder aktives Sensorelement bezeichnet, dem durch das vorbeiströmende Messmedium Wärme entzogen wird. Die entzogene Energie wird durch ein Erhöhen des elektrischen Heizstroms wieder ausgeglichen. Dadurch stellt sich eine konstante Temperaturdifferenz zwischen dem heizenden und messendem Sensorelement, also dem aktiven Sensorelement, und einem vorhandenen Referenztemperaturfühler ein, welches nachfolgend auch als messendes oder passives Sensorelement bezeichnet wird. Je grösser der Massedurchfluss ist, desto mehr Energie wird benötigt um diese Differenz zu halten. Der gemessene Heizstrom ist demzufolge proportional zum Massedurchfluss. Das thermische Messprinzip ist in der Verfahrenstechnik gut etabliert und wird in zahlreichen Anwendungen erfolgreich eingesetzt. Besonders anspruchsvoll ist die Anwendung des Messprinzips in Wasser und anderen Flüssigkeiten wie z.B. Öl, da hier die Wärmeübergänge und die benötigte Heizleistung im Vergleich zu Gasen wesentlich höher sind. Bei Geschwindigkeiten >2,5 m/s kann es deshalb zu einer Abflachung der Kennlinie und damit zu einer verringerten Sensitivität kommen. Außerdem kann es bei geringer Beabstandung der Sensorelemente zueinander unter Umständen zu einem Übersprechen des heizenden Sensorelements zum temperaturmessenden Sensorelement kommen, z.B. bei tiefen Geschwindigkeiten <0,2 m/s.

Es sind Sensoren bekannt, welche sich aus zwei Sensorelementen, einem heizenden und einem messenden Sensorelement bestehen, welche jeweils eine zylindrische Sensorkappe aufweisen und aus einer Grundfläche eines Sensors herausstehen. In der Stirnfläche der Sensorkappen sind Widerstandssensoren eingelötet. Aufgrund der zylindrischen Sensorkappen weisen die Sensorelemente bereits eine gute thermische Isolation auf. Diese Sensoren verfügen allerdings über eine schlechtere Charakteristik in Wasser, als die zuvor genannten Sensoren. So erreicht bei steigendem Durchfluss die Kennlinie vergleichsweise schnell einen Sättigungsgrad, bei welcher eine maximale Leistung einspeisbar ist. Bei Erreichen dieser Leistungsgrenze kann trotz höherer Geschwindigkeit nicht mehr Wärme in die Strömung eingetragen werden. Da die Kennlinie den Messbereich für die Strömungsgeschwindigkeit des Mediums darstellt, bis welcher eine Messung erfolgen kann, ist bei einem schnellen Erreichen des Sättigungsgrades die Messung bei zu schnellen Strömungen nicht mehr möglich.

Bisher sind Anschlusskonzepte für RTD's in Sensorgehäusen üblich, welche auf einem Anbringen der RTD's in Hülsen bekannt sind. Deren Anschlussdrähte werden aus den Hülsen ausgeführt.

Die Schrift US7293457B2 lehrt ein thermisches Durchflussmessgerät, bei welchem ein Temperaturfühlelement mit einer Platine verbunden ist, welche Platine in einer Mulde eines Platinengehäuses angeordnet und dort verklebt ist.
Die Aufgabe der vorliegenden Erfindung besteht darin eine leichtere Montage des Temperatursensors zu ermöglichen, sowie ein entsprechendes Durchflussmessgerät bereitzustellen
Diese Aufgabe wird durch einen Temperatursensor mit den Merkmalen des Anspruchs 1 sowie durch ein thermisches Durchflussmessgerät gemäß Anspruch 14 gelöst. Erfindungsgemäß weist ein Temperatursensor mit einem Gehäuse umfassend einen Gehäusekörper und eine Gehäusekammer in welcher Gehäusekammer endständig jeweils zwei Temperaturfühlerelemente, welche insbesondere als Dünnfilm-Widerstandsthermometer ausgebildet sind, angeordnet sind, wobei eines der Temperaturfühlerelemente beheizbar ist, wobei von jedem Temperaturfühlerelementen zumindest ein Anschlussdraht abgeht, welcher mit einer Platine verbunden ist, wobei die Platine in der Gehäusekammer angeordnet ist, wobei die Platine durch eine Rastverbindung in dieser Gehäusekammer positioniert ist, wobei ein Anschlussdraht eines ersten Temperaturfühlerelements zugentlastend in einer ersten Richtung und ein Anschlussdraht eines zweiten Temperaturfühlerelements zugentlastend in einer der ersten Richtung entgegengesetzten zweiten Richtung durch die Platine geführt und mit dieser verbunden sind. Durch die Positionierung der Platine in der Gehäusekammer mittels einer Rastverbindung gelingt eine Erleichterung der Montage. Durch die zweiseitige Zugentlastung der Anschlussdrähte können Kabel bzw. Vierleiterkabel beidseitig von der Platine weggeführt werden und dementsprechend ein Montagevorteil erreicht werden. Vorteilhafte Ausgestaltungen der Erfindung sind Gegenstand der Unteransprüche.
Es ist von Vorteil, wenn die Gehäusekammer eine Verstärkungsschicht aufweist, welche Verstärkungsschicht zur Verrastung mit der Platine einen Eingriff, also eine Vertiefung, oder einen Vorsprung aufweist oder ausbildet.

Dies ist insbesondere von Vorteil, sofern ein endständiger Teil des Gehäuses als Tiefziehkappe mit einer Wanddicke von weniger als 2 mm, vorzugsweise weniger als 1,5 mm, insbesondere weniger als 0,8 mm ausgebildet ist. Um eine dauerhafte Anbindung der Verstärkungsschicht an den Gehäusekörper zu ermöglichen, kann ein Stoffschluss beider Bauteile durchgeführt werden, beispielsweise durch Schweißen oder Löten.

Es ist von Vorteil, wenn der Anschlussdraht im Bereich der Platine mit einer Vergussmasse umgeben ist. Es ist weiterhin von Vorteil, wenn in der Gehäusekammer zumindest ein erster elastischer Körper zum Führen des Anschlussdrahtes angeordnet ist. Durch den elastischen Körper, welcher beispielsweise als Scheibe ausgebildet sein kann, wird eine geringere Anfälligkeit des Messsignals bei Vibrationen erreicht. Es ist weiterhin von Vorteil, wenn das Gehäuse, insbesondere die Gehäusekammer, einen zweiten elastischen Körper aufweist, welcher sich an dem ersten elastischen Körper und/oder an einer Wandung des Gehäuses abstützt und welcher eine Rückstellkraft auf die verrastete Platine ausübt. Die Gehäusekammer weist dabei eine Vergussmasse auf, wobei die Temperaturfühlerelemente vorteilhaft vergussmassefrei in der Gehäusekammer angeordnet sind.
Insbesondere können der erste und der zweite elastische Körper jeweils Silikonkörper sein. Silikon weist eine gute Temperaturbeständigkeit und eine gute chemische Beständigkeit auf.
Eine gute Dichtigkeit durch die elastischen Körper, insbesondere durch bei deren Ausgestaltung als Silikonkörper, kann auch bei Temperatursensoren erreicht werden, welche als Vierleitermessgeräte ausgebildet sind. Es ist weiterhin von Vorteil, wenn die Platine eine erste Anzahl Materialausnehmungen, insbesondere Löcher, aufweist zum Anschluss von Anschlussdrähten und/oder Kabeln und eine zweite Anzahl Materialausnehmungen, insbesondere Löcher aufweist zur Verminderung der thermischen Ausdehnung der Platine.
Durch die Verminderung der thermischen Ausdehnung kann eine Schädigung der Platine, vermieden werden.
Dabei kann die zweite Anzahl von Materialausnehmungen, insbesondere Löcher, in auf der Platine angeordneten Leiterbahnen angeordnet sein.
Erfindungsgemäß umfasst ein Durchflussmessgerät zumindest einen Temperatursensor nach dem Oberbegriff eines der Ansprüche 1-13 und eine Auswerteeinheit. Ein erfindungsgemäßes Ausführungsbeispiel wird nachfolgend anhand von Figuren näher beschrieben. Sie zeigen:
- Fig. 1: Schnittansicht eines Gehäuses eines Sensors eines thermischen Durchflussgerätes;

- Fig. 2: Schnittansicht eines erfindungsgemäßen Sensors;

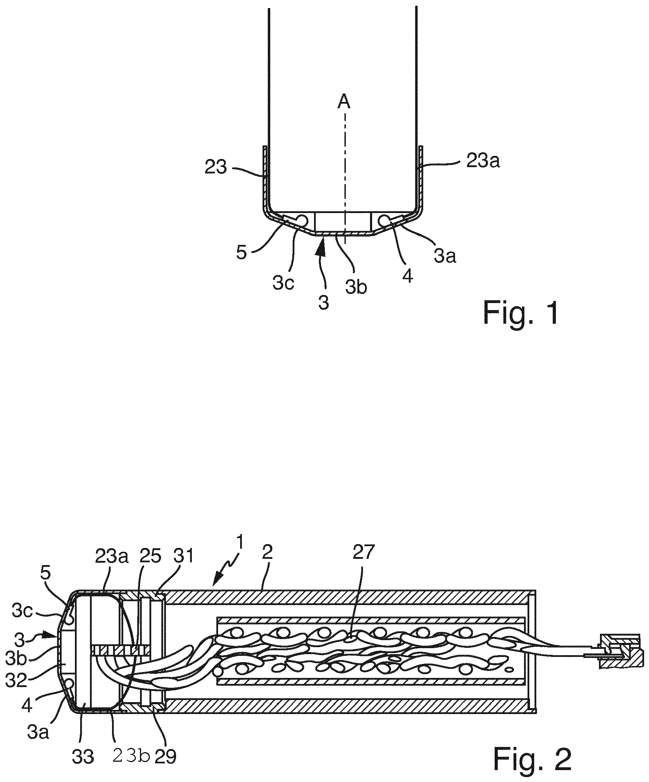

Fig. 1 zeigt einen Sensor eines thermischen Durchflussmessgerätes, welcher als ein thermischer Massestromsensor 1 ausgebildet ist.

Herkömmliche thermische Durchflussmessgeräte verwenden üblicherweise zwei möglichst gleichartig ausgestaltete beheizbare Widerstandsthermometer, die in, meist stiftförmigen Metallhülsen, sog. Stingers oder in zylindrischen Metallhülsen angeordnet sind und die in thermischem Kontakt mit dem durch ein Messrohr oder durch die Rohrleitung strömenden Medium sind. Für die industrielle Anwendung sind beide Widerstandsthermometer üblicherweise in ein Messrohr eingebaut; die Widerstandsthermometer können aber auch direkt in der Rohrleitung montiert sein. Einer der beiden Widerstandsthermometer ist ein sogenanntes aktives Sensorelement, der mittels einer Heizeinheit beheizt wird. Als Heizeinheit ist entweder eine zusätzliche Widerstandsheizung vorgesehen, oder bei dem Widerstandsthermometer selbst handelt es sich um ein Widerstandselement, z. B. um einen RTD-(Resistance Temperature Device)Sensor, der durch Umsetzung einer elektrischen Leistung, z. B. durch eine entsprechende Variation des Messstroms erwärmt wird. Bei dem zweiten Widerstandsthermometer handelt es sich um ein sog. passives Sensorelement: Es misst die Temperatur des Mediums.

Üblicherweise wird in einem thermischen Durchflussmessgerät ein beheizbares Widerstandsthermometer so beheizt, dass sich eine feste Temperaturdifferenz zwischen den beiden Widerstandsthermometer einstellt. Alternativ ist es auch bekannt geworden, über eine Regel-/Steuereinheit eine konstante Heizleistung einzuspeisen.

Tritt in dem Messrohr kein Durchfluss auf, so wird eine zeitlich konstante Wärmemenge zur Aufrechterhaltung der vorgegebenen Temperaturdifferenz benötigt. Ist hingegen das zu messende Medium in Bewegung, ist die Abkühlung des beheizten Widerstandsthermometer wesentlich von dem Massedurchfluss des vorbeiströmenden Mediums abhängig. Da das Medium kälter ist als das beheizte Widerstandsthermometer, wird durch das vorbeiströmende Medium Wärme von dem beheizten Widerstandsthermometer abtransportiert. Um also bei einem strömenden Medium die feste Temperaturdifferenz zwischen den beiden Widerstandsthermometern aufrecht zu erhalten, ist eine erhöhte Heizleistung für den beheizten Widerstandsthermometer erforderlich. Die erhöhte Heizleistung ist ein Maß für den Massedurchfluss bzw. den Massestrom des Mediums durch die Rohrleitung.

Wird hingegen eine konstante Heizleistung eingespeist, so verringert sich infolge des Durchflusses des Mediums die Temperaturdifferenz zwischen den beiden Widerstandsthermometern. Die jeweilige Temperaturdifferenz ist dann ein Mass für den Massedurchfluss des Mediums durch die Rohrleitung bzw. durch das Messrohr.

Es besteht somit ein funktionaler Zusammenhang zwischen der zum Beheizen des Widerstandsthermometers notwendigen Heizenergie und dem Massedurchfluss durch eine Rohrleitung bzw. durch ein Messrohr. Die Abhängigkeit des Wärmeübertragungskoeffizienten von dem Massedurchfluss des Mediums durch das Messrohr bzw. durch die Rohrleitung wird in thermischen Durchflussmessgeräten zur Bestimmung des Massedurchflusses genutzt. Geräte, die auf diesem Prinzip beruhen, werden von der Anmelderin unter der Bezeichnung, 't-switch', 't-trend' oder 't-mass' angeboten und vertrieben.

Bei der Ermittlung des thermischen Massedurchflusses kann ein thermisches Durchflussmessgerät bei der Messung von Flüssigkeiten an eine Höchstleistungsgrenze gelangen. Da Flüssigkeiten gegenüber Gasen einen wesentlich höheren Wärmeleitkoeffizienten aufweisen wird bei höherer Geschwindigkeit eine größere Wärmeenergie von der Oberfläche des aktiven Temperatursensors abtransportiert. Bei zunehmender Geschwindigkeit des Mediums ist dabei schnell eine Sättigung bzw. die Leistungsobergrenze des Widerstandsthermometers erreicht, so dass der Messbereich auf Flüssigkeiten mit geringen Strömungsgeschwindigkeiten begrenzt ist. Dieser Nachteil wird durch einen Sensor eines thermischen Durchflussmessgerätes, wie es in Fig. 1-2 abgebildet ist, behoben.

Fig. 1 zeigt einen Sensor 1 für ein thermisches Durchflussmessgerät. Dieser Sensor 1 weist einen Sensorkorpus 2 mit einer zylindrischen Form und mit einer Längsachse A und einer endständigen Stirnfläche 3 mit einem Mittelpunkt M, durch welchen die Längsachse A verläuft, auf. Dieser zylindrische Sensorkorpus weist einen Durchschnitt d zwischen vorzugsweise 10-30 mm, insbesondere zwischen 15 - 22 mm auf und weist zudem eine innere Gehäusekammer auf. Diese Stirnfläche 3 ist in mehrere Segmente 3a-3c aufgeteilt. Die Segmente sind nebeneinander angeordnet mit einem ersten Seitensegment 3a, einem Mittelsegment 3b und einem zweiten Seitensegment 3c.

Dabei ist zumindest ein erstes Seitensegment in der Schnittansicht der Fig. 1 als eine gegenüber der Längsache A geneigte Fläche ausgebildet, deren Flächennormalenvektor mit der Längsachse einen Winkel α von vorzugsweise zumindest 5°, vorzugsweise zumindest 8°, besonders bevorzugt zwischen 10-35° einschließt. Dabei kann die Fläche insbesondere eben ausgebildet sein, aufgrund von Oberflächenrauhigkeiten Unebenheiten aufweisen oder in einer Bogenform zum Messmedium hin oder vom Messmedium weg verlaufen.

Dieses erste Seitensegment 3a ist bevorzugt ein Seitensegment, dessen geneigte Fläche in Richtung der Anströmseite des Sensors 1, also entgegen der Strömungsrichtung S, geneigt ist.

Unterhalb des ersten Seitensegments 3a ist ein erstes Temperaturfühlerelement, welches vorliegend als Widerstandsthermometer 4 ausgebildet ist, angeordnet, dessen Aufbau im Folgenden anhand einer beispielhaften Ausgestaltung näher beschrieben wird. Dieses Widerstandsthermometer 4 ist vorzugsweise als ein Dünnschichtelement, ausgebildet. Das Widerstandsthermometer 4 weist einen dreischichtigen Aufbau auf, mit einem Keramiksubstrat, einem mäanderförmig ausgebildeten Metallschicht, vorzugsweise aus Platin, und einer darüber angeordneten Glasschutzschicht. Von dem Metalldraht gehen eine Zu- und eine Ableitung ab. Die Temperaturmessung erfolgt durch die Ausnutzung der Temperaturabhängigkeit eines elektrischen Widerstandes bei der Leitung von Strom. In diesem Betriebszustand kann das Widerstandsthermometer 4 als passiver Sensorelement eingesetzt werden. Das vorbeschriebene Widerstandsthermometer 4 misst als passives Sensorelement die Mediumstemperatur und bringt als aktives Sensorelement unter Einstellung der Stromstärke auch selbst eine Wärmemenge in das Medium. In diesem Fall ist das Widerstandsthermometer 4 des ersten Seitensegments 3a ein aktives Sensorelement, welches eine konstante Temperatur aufweist und Wärmeenergie an das vorbeifließende Medium abgibt.
Dieses Sensorelement bzw. Widerstandsthermometer 4 ist vorzugsweise als Dünnschichtelement plattenförmig aufgebaut. In einer besonders bevorzugten Ausführungsvariante der Erfindung ist das plattenförmige Dünnschichtelement im Wesentlichen parallel zu der Fläche des ersten Seitensegments 3a ausgerichtet. Kleinere Abweichungen von weniger als 10°, vorzugsweise weniger als 5° zu der Parallelebene können dabei auftreten.
Im Folgenden wird eine erste Ausführungsvariante beschrieben in welcher das erste Widerstandsthermometer 4, welches an oder unterhalb des ersten Seitensegments 3a angeordnet ist, als aktiver Sensorelement betrieben wird. Dabei handelt es sich bei dem anströmseitigen Seitenelement 3a um das Segment der Stirnfläche 3, auf welche die Strömung des Mediums in Strömungsrichtung S als erstes trifft.
Auf ähnliche Weise wie das erste Widerstandsthermometer 4 ist vorzugsweise ein zweites Temperaturelement, welches als Widerstandsthermometer 5 ausgebildet ist, im Sensor 1 unterhalb des zweiten Seitensegments 3c angeordnet. Dabei fungiert dieses zweite Widerstandsthermometer 5 in der vorliegenden ersten Ausführungsvariante als passives Widerstandsthermometer zur Erfassung der Mediumstemperatur.
Besonders bevorzugt weist das Mittelsegment 3b eine Fläche mit einem Flächennormalenvektor auf, welcher entlang der Längsachse verläuft. Kleinere Abweichungen von weniger als 1 °, vorzugsweise weniger als 0,5° zu der Parallelebene können dabei auftreten.

Weiterhin besonders bevorzugt ist das zweite Seitensegment in der Schnittansicht der Fig. 1 als eine gegenüber der Längsache A geneigte Fläche ausgebildet, deren Flächennormalenvektor mit der Längsachse A einen Winkel β von vorzugsweise zumindest 5°, vorzugsweise zumindest 8°, besonders bevorzugt zwischen 10-35° einschließt. Dabei kann die Fläche insbesondere eben ausgebildet sein, aufgrund von Oberflächenrauhigkeiten Unebenheiten aufweisen oder in einer Bogenform zum Messmedium hin oder vom Messmedium weg verlaufen.

Dieses zweite Seitensegment 3c ist bevorzugt ein Seitensegment, dessen geneigte Fläche in Strömungsrichtung S des Messmediums geneigt ist.

Die durch die spezielle Ausgestaltung des Sensors 1 in Kombination mit dem an der ersten Stirnseite 3a angeordneten aktiven Sensorelements 4 erreichten Effekte werden nachfolgend näher erläutert.

Die Neigung des ersten anströmseitig angeordneten Seitensegments 3a bewirkt eine Verringerung der thermischen Grenzschichtdicke verglichen zu einer planaren Oberfläche, allerdings erfolgt die Ausformung einer vergleichsweise gleichmäßig über die Oberfläche verteilten eng anliegenden Grenzschicht. Durch diese Grenzschicht wird die Wärmeabgabe des aktiven Sensorelements reduziert. Anders gesagt, wird durch das Vorhandensein der Grenzschicht der Temperaturgradient zwischen Medium und Sensoroberfläche verringert, wodurch ein geringerer Wärmeeintrag erfolgen muss. Durch die Grenzschicht benötigt der Sensor eine geringere Leistung im Messbetrieb.

In einer zweiten bevorzugten Ausführungsvariante der Erfindung wird das zweite Widerstandsthermometer 5 des stromabwärtig angeordneten zweiten Seitensegments 3c als aktives Sensorelement betrieben und das erste Widerstandsthermometer 4 des stromaufwärtig angeordneten ersten Seitensegments 3a als passives Sensorelement.

Bei geringeren Strömungsgeschwindigkeiten erfolgt ein Grenzschichtaufbau über die gesamte Stirnfläche 3 des Sensors und liegt in besonders hoher Schichtdicke im strömungsabwärtigen Bereich vor. Diese Grenzschicht ermöglicht, wie schon im vorangegangenen Ausführungsbeispiel beschrieben, einen geringeren Wärmeeintrag in das Medium und damit ein Hinauszögern des Sättigungsgrades auf höhere Fließgeschwindigkeiten des Mediums.

Im hinteren Teil am Übergang zwischen dem Mittelsegment 3b und dem zweiten stromabwärtigen Seitensegment 3c wird zudem eine Abrisskante geschaffen, an welcher die Strömung bei höheren Geschwindigkeiten abreißt. Zugleich wird dabei bei erhöhter Geschwindigkeit des Mediums eine Rezirkulation aufgebaut, also eine Strömung welche der Hauptströmungsrichtung zumindest teilweise entgegengerichtet ist. Diese Rezirkulation ist langsamer, vorzugsweise um zumindest 20% langsamer, besonders bevorzugt um mindestens 40% langsamer als die Hauptströmung, verhält sich zur Hauptströmung jedoch proportional. Der der Hauptströmung entgegengerichtete Teil der Rezirkulation streicht in Mediumsrichtung unterhalb des Übergangs bzw. unterhalb der Abrisskante an dem zweiten stromabwärtigen Seitensegment vorbei und nimmt dabei eine geringere Wärmeenergie auf, als dies bei der Hauptströmung der Fall wäre. Dadurch wird weniger Leistung zur Aufrechterhaltung der Temperatur benötigt und eine Leistungssättigung tritt erst bei sehr hohen Fließgeschwindigkeiten auf.

Somit beruht die optimierte Geometrie des Sensors auf zwei unterschiedlichen Phänomenen, der Ausbildung einer Strömungsgeschwindigkeitsabhängigen Rezirkulation im Abströmbereich bei hohen Geschwindigkeiten und der Ausbildung einer einheitlichen Grenzschicht im Anström bereich.

Zusammengefasst liefert die neue Sensorgeometrie stabilere und verlässlichere Messwerte als bisherige Geometrien.

In einer weiteren nicht-näher dargestellten Ausführungsvariante ist die Stirnfläche als Kappe auf einen zylindrischen Sensor aufgesetzt, so dass die Kappe im Falle einer Verschmutzung einfach austauschbar ist. Alternativ können diese Kappen auch auf bereits bestehenden Sensoren, insbesondere mit ebender Stirnseite, aufgesetzt werden, so dass ein Nachrüsten bereits bestehender Sensoren möglich ist.

Die Biotzahl, welche den Wärmetransport von der Oberfläche zum umgebenden Medium zur Wärmeleitung durch den Körper beschreibt, ist aufgrund der Grenzschicht im Vergleich zu einem Sensor mit überwiegend ebener Stirnfläche verringert.

Ab welchen Strömungsgeschwindigkeiten eine Rezirkulation aufgebaut wird, hängt nicht zuletzt von der Art des Mediums ab. Entsprechend kann durch die Neigungswinkel der Seitensegmente bei unterschiedlichen Medien variieren.

Die Stirnfläche kann bei Messrohren mit geringen Nennweiten auch vorteilhaft einen Steg aufweisen, welcher in Strömungrichtung des Mediums verläuft. Dieser Steg ist besonders vorteilhaft bei Messrohren mit kleineren Nennweiten, da es zu einer geringeren Stauung des Mediums am Sensor kommt und zu geringeren Druckverlusten.

In dem in Fig. 2 gezeigten Sensor sind dabei Bauteile integriert, welche einerseits zur Erleichterung der Herstellung und der Verminderung der Ausschussrate beitragen und andererseits die Anfälligkeit des Temperatursensors gegenüber Vibrationen und Feuchtigkeit verringern.
Dabei ist der Sensor bzw. Temperatursensor im Rahmen der vorliegenden Erfindung nicht auf einen besonders bevorzugten Sensor mit einer oder mehreren angewinkelten Stirnflächensegmenten, wie dies zuvor beschrieben wurde, beschränkt, sondern kann auch ein Sensor mit ebenen Stirnflächen sein. In der Gehäusekammer sind endständig jeweils ein Widerstandsthermometer (RTD) 4 oder 5 parallel zu einem der Seitensegmente 3a und 3c eingesetzt, von denen zumindest ein Widerstandsthermometer beheizbar ist und welche im vorliegenden Ausführungsbeispiel als Dünnfilm-Widerstandsthermometer ausgebildet sind. Zur Vereinfachung wird nachfolgend lediglich die Anordnung eines der Widerstandsthermometers 4 oder 5 in der Gehäusekammer erläutert.
Das Widerstandsthermometer ist auf der Innenseite des Gehäuses 1 in der Gehäusekammer angelötet. Von dem Widerstandsthermometer 4 oder 5 gehen jeweils zwei Signalpfade hier in Form von Anschlussdrähten 23 ab, die vorzugsweise vergoldet sind. Durch diese Anschlussdrähte erfolgt eine Anbindung des Dünnfilm-Widerstandsthermometers an eine Platine 25.
Die Anschlussdrähte des ersten der beiden Widerstandsthermometer sind in einer ersten Richtung in der Platine 25 angeordnet und die Anschlussdrähte des zweiten der beiden Widerstandsthermometer an oder in einer der ersten Richtung entgegengesetzten zweiten Richtung an oder in der Platine 25 angeordnet. Durch diese Anordnung können Kabel bzw. Vierleiterkabel beidseitig von der Platine weggeführt werden. Durch die geänderte Anordnung der Anschlussdrähte und der Kabel bzw. Vierleiterkabel an die Platine kann ein Montagevorteil erreicht werden.
Endständig im Bereich der Stirnseite ist der Gehäusekorpus vorteilhaft durch eine Tiefziehkappe mit geringer Wanddicke von vorzugsweise zwischen 0,5 bis 2 mm gebildet. Dadurch wird eine schnelle Wärmeübertragung zwischen dem Widerstandsthermometer 4 oder 5 und dem Medium ermöglicht.
Wie in Fig. 2 erkennbar, werden die Anschlussdrähte zunächst jeweils an der Außenseite der Gehäusekammer entlanggeführt. Anschließend werden die Anschlussdrähte 23 zu einer Platine 25 hingeführt und zugentlastend an dieser Platine 25 befestigt. Die zugentlastende Befestigung der Anschlussdrähte erleichtert die Montage des Temperatursensors Im Bereich zwischen dem Dünnschicht-Widerstandsthermometer und der Platine sind die Anschlussdrähte vorzugsweise mit einem nicht näher dargestellten Teflonschlauch ummantelt.

Von der Platine 25 gehen mehrere Signalpfade ab, vorliegend in Form von ummantelten Kabeln 27 bzw. Vierleiterkabeln, welche den Temperatursensor mit einer Auswerteeinheit verbinden. Diese gehen in Fig. 2 einseitig von der Platine ab.

Die Platine 25 weist seitliche Rastelemente auf, welche mit einem Eingriff 29 des Gehäuses 1 oder alternativ einem Vorsprung des Gehäuses eingreifen können. Insgesamt erfolgt durch die Vorgabe der Position der Platine im Gehäuse eine schnellere Montage.

Zur Schaffung des Eingriffs bedarf es allerdings einer gewissen Wandstärke, so dass der Eingriff in Form einer umlaufenden Nut 29 eingefräst werden kann. Dies kann allerdings aufgrund der geringen Wandstärke der endständigen Tiefziehkappe nicht gewährleistet werden. Erfindungsgemäß wird daher ein Verstärkungselement mit einem Eingriff, vorzugsweise einer umlaufenden Nut, in der Gehäusekammer an der Wandung der Tiefziehkappe angeordnet.

Durch dieses Verstärkungselement 31 wird eine Verrastung der Platine mit dem Gehäuse ermöglicht

Alternativ oder zusätzlich kann auch das Gehäuse 1 Rastelemente aufweisen, welche mit einem Eingriff oder Vorsprung der Platine 25 verrasten können. Diese Rastelemente werden ebenfalls durch ein Verstärkungselement, welches an der Tiefziehkappe angeordnet ist, bereitgestellt.

Die Gehäusekammer des Temperatursensors ist endständig zwischen der Platine der Gehäusewandung mit den darauf angebrachten Widerstandsthermometern mit Silikonkörpern 21, 22 ausgefüllt.

Zugleich entwickeln die Silikonkörper aufgrund ihrer Eigenelastizität Rückstellkräfte, welche auf die Platine 25 einwirken und ein wirkungsvolleres Verrasten ermöglichen. Dabei liegt die Platine vorzugsweise zumindest auf einem der Silikonköper auf.

Nachfolgend soll die zugentlastende Befestigung bzw. Verbindung der Anschlussdrähte 23 an der Platine 25 näher erläutert werden.
Sie erfolgt derart, dass die Anschlussdrähte durch ein erstes Loch in der Platine 25 geführt werden, anschließend in eine Richtung senkrecht zum Lochverlauf des ersten Loches geführt werden und anschließend in eine Richtung parallel zum Lochverlauf an der Platine geführt und befestigt werden. Somit erfolgt die Befestigung an einer Wandung der Platine, die parallel zum ersten Loch verläuft. Somit werden die Anschlussdrähte in einer ersten Richtung A in das Loch der Platine eingeführt und in eine zweite Richtung B, die entgegengesetzt zur ersten Richtung A ist, an der Platine befestigt. Derartige zugentlastende Anordnungen an Platinen sind aus anderen Anwendungsbereichen bereits bekannt und dienen einer dauerhaften Befestigung von Anschlussdrähten an einer Platine.
Im vorliegenden Fall jedoch dient die Zugentlastung der Anschlussdrähte lediglich einer besseren Stabilität der Anbindung vor und während des Vergießens.
Die vorgenannten mechanischen Maßnahmen zur Verbesserung der Befestigung der Platine und der daran befestigten Anschlussdrähte wird die Ausschussrate bei der Herstellung und die Ausfallrate des Temperatursensors im Betrieb entscheidend gesenkt werden. Dabei ergänzen sich einzelne Maßnahmen, welche für sich genommen bereits Vorteile mit sich bringen, idealerweise zu einem Gesamtkonzept. Das vorgenannte Anschlusskonzept kann grundsätzlich auf alle bekannten Mehrleitermesstechniken der thermischen Durchflussmessung angewandt werden.

## Patentansprüche

1. Temperatursensor mit einem Gehäuse(1) umfassend einen Gehäusekörper und eine
Gehäusekammer in welcher Gehäusekammer endständig jeweils zwei Temperaturfühlerelemente, welche insbesondere als Dünnfilm-Widerstandsthermometer (4 oder 5) ausgebildet sind, angeordnet sind, wobei eines der Temperaturfühlerelemente beheizbar ist, wobei von jedem Temperaturfühlerelementen zumindest ein Anschlussdraht (23) abgeht, welcher mit einer Platine (25) verbunden ist,
wobei
die Platine (25) in der Gehäusekammer angeordnet ist, **dadurch gekennzeichnet, dass** die Platine (25) durch eine Rastverbindung in dieser Gehäusekammer positioniert ist, wobei ein Anschlussdraht (23a) eines ersten Temperaturfühlerelements zugentlastend in einer ersten Richtung und ein Anschlussdraht (23b) eines zweiten Temperaturfühlerelements zugentlastend in einer der ersten Richtung entgegengesetzten zweiten Richtung durch die Platine (25) geführt und mit dieser verbunden sind.

2. Temperatursensor nach Anspruch 1, **dadurch gekennzeichnet, dass** die Gehäusekammer eine Verstärkungsschicht (31) aufweist, welche Verstärkungsschicht zur Verrastung mit der Platine (25) einen Eingriff oder einen Vorsprung aufweist oder ausbildet.

3. Temperatursensor nach einem der Ansprüche 1 oder 2, **dadurch gekennzeichnet, dass** ein endständiger Teil des Gehäuses als Tiefziehkappe mit einer Wanddicke von weniger als 2 mm, vorzugsweise weniger als 1,5mm, insbesondere weniger als 0,8 mm ausgebildet ist.

4. Temperatursensor, nach einem der vorhergehenden Ansprüche,
**dadurch gekennzeichnet,**
**dass** die Verstärkungsschicht (31) durch Stoffschluss an dem Gehäusekörper angebracht ist.

5. Temperatursensor nach Anspruch 4, **dadurch gekennzeichnet,**
**dass** der Anschlussdraht (23a) des ersten Temperaturfühlerelements im Bereich der Platine (25) mit einer Vergussmasse umgeben ist.

6. Temperatursensor, nach einem der vorhergehenden Ansprüche,
**dadurch gekennzeichnet,**
**dass** in der Gehäusekammer zumindest ein erster elastischer Körper (21) zum Führen des Anschlussdrahtes (23) angeordnet ist.

7. Temperatursensor nach Anspruch 5, **dadurch gekennzeichnet,**
**dass** in der Gehäusekammer ein zweiter elastischer Körper (22) angeordnet ist, welcher sich an dem ersten elastischen Körper (21) und/oder an einer Wandung des Gehäuses (1) abstützt und welcher eine Rückstellkraft auf die verrastete Platine (25) ausübt.

8. Temperatursensor nach Anspruch 5 oder 6, **dadurch gekennzeichnet,**
**dass** der erste elastische Körper (21) vorgesehen ist zur Verringerung von thermischen und
mechanischen Spannungen des Anschlussdrahtes (23) bei Zugbelastung.

9. Temperatursensor nach einem der vorhergehenden Ansprüche,
**dadurch gekennzeichnet,**
**dass** die Gehäusekammer eine Vergussmasse aufweist, wobei die Temperaturfühlerelemente vergussmassefrei in der Gehäusekammer angeordnet sind.

10. Temperatursensor nach einem der vorhergehenden Ansprüche,
**dadurch gekennzeichnet, dass** der erste und der zweite elastische Körper (21, 22) jeweils Silikonkörper sind.

11. Temperatursensor, nach einem der vorhergehenden Ansprüche,
**dadurch gekennzeichnet, dass** die Platine (25) eine erste Anzahl Materialausnehmungen, insbesondere Löcher, aufweist zum Anschluss von Anschlussdrähten und/oder Kabeln und eine zweite Anzahl Materialausnehmungen, insbesondere Löcher, aufweist zur Verminderung der thermischen Ausdehnung der Platine (25).

12. Temperatursensor nach Anspruch 11, **dadurch gekennzeichnet, dass** die Materialausnehmungen, insbesondere Löcher, in auf der Platine (25) angeordneten Leiterbahnen angeordnet sind.

13. Temperatursensor nach einem der vorhergehenden Ansprüche
**dadurch gekennzeichnet, dass** der Temperatursensor als Vierleitermessgerät ausgebildet ist.

14. Thermisches Durchflussmessgerät umfassend einen Temperatursensor nach einem der vorhergehenden Ansprüche und eine Auswerteeinheit.

## Claims

1. Temperature sensor with a housing (1) comprising a housing body and a housing chamber, wherein two temperature sensing elements, which are particularly designed as thin-film resistance thermometers (4 or 5), are arranged at the either end of the housing chamber, wherein one of the temperature sensing elements can be heated, wherein at least one connecting wire (23), which is connected to a board (25), exits each of the temperature sensing elements, wherein the board (25) is arranged in the housing chamber
**characterized in that**
the board (25) is positioned in the housing chamber by a click-in connection, wherein a connection wire (23a) of a first temperature sensing element is guided in a strain-relieved manner in a first direction through the board (25), and a connection wire (23b) of a second temperature sensing element is guided through the board (25) in a strain-relieved manner in a second direction opposite to the first direction, and said connection wires are connected to said board.

2. Temperature sensor as claimed in Claim 1,
**characterized in that**
the housing chamber has a reinforcement layer (31), said reinforcement layer having or forming a slit or a projection to engage with the board (25).

3. Temperature sensor as claimed in one of the Claims 1 or 2,
**characterized in that**
a terminal part of the housing is formed as a deep draw cap with a wall thickness of less than 2 mm, preferably less than 1.5 mm, particularly less than 0.8 mm.

4. Temperature sensor as claimed in one of the previous claims,
**characterized in that**
the reinforcement layer (31) is applied by adhesive bonding on the housing body.

5. Temperature sensor as claimed in Claim 4,
**characterized in that**
the connection wire (23a) of the first temperature sensing element is surrounded by a potting compound in the area of the board (25).

6. Temperature sensor as claimed in one of the previous claims,
**characterized in that**
at least a first elastic body (21) for guiding the connection wire (23) is arranged in the housing chamber.

7. Temperature sensor as claimed in Claim 5,
**characterized in that**
a second elastic body (22) is provided in the housing chamber, said second elastic body being supported on the first elastic body (21) and/or on a wall of the housing (1) and exerting a restoring force on the engaged board (25).

8. Temperature sensor as claimed in Claim 5 or 6,
**characterized in that**
the first elastic body (21) is provided to reduce thermal and mechanical tension of the connection wire (23) in the event of tensile load.

9. Temperature sensor as claimed in one of the previous claims,
**characterized in that**
the housing chamber has a potting compound, wherein the temperature sensing elements are arranged in the housing chamber free from potting compound.

10. Temperature sensor as claimed in one of the previous claims,
**characterized in that**
the first and second elastic body (21, 22) are each silicone bodies.

11. Temperature sensor as claimed in one of the previous claims,
**characterized in that**
the board (25) has a first number of material recesses, particularly holes, for the connection of connection wires and/or cables and a second number of material recesses, particularly holes, to reduce the thermal expansion of the board (25).

12. Temperature sensor as claimed in Claim 11, **characterized in that** the material recesses, particularly holes, are arranged in conductive tracks arranged on the board (25).

13. Temperature sensor as claimed in one of the previous claims,
**characterized in that** the temperature sensor is designed as a four-wire measuring device.

14. Thermal flowmeter comprising a temperature sensor as claimed in one of the previous claims and an evaluation unit.

## Revendications

1. Capteur de température avec un boîtier (1) comprenant un corps de boîtier et une chambre de boîtier, dans laquelle sont disposés en son extrémité deux éléments de sonde de température, lesquels sont conçus notamment sous la forme d'un thermomètre à résistance à couche mince (4 ou 5), l'un des éléments de sonde de température étant chauffant, au moins un fil de raccordement (23) partant de chaque élément de sonde de température, lequel fil est relié avec une platine (25),
pour lequel
la platine (25) est disposée dans la chambre de boîtier,
**caractérisé**
**en ce que** la platine (25) est positionnée dans cette chambre de boîtier au moyen d'une liaison par enclenchement, un fil de raccordement (23a) - muni d'une décharge de traction - d'un premier élément de sonde de température étant guidé dans une première direction et un fil de raccordement (23b) - muni d'une décharge de traction - d'un deuxième élément de sonde de température étant guidé dans une deuxième direction opposée à la premier direction à travers la platine (25), et reliés à cette dernière.

2. Capteur de température selon la revendication 1, **caractérisé en ce que** la chambre de boîtier comporte une couche de renfort (31), laquelle couche présente ou forme une prise ou une saillie pour l'enclenchement de la platine (25).

3. Capteur de température selon la revendication 1 ou 2, **caractérisé en ce qu'**une partie d'extrémité du boîtier est conçue en tant que capuchon d'emboutissage d'une épaisseur de paroi de moins de 2 mm, de préférence de moins de 1,5 mm et particulièrement de préférence de moins de 0,8 mm.

4. Capteur de température selon l'une des revendications précédentes, **caractérisé en ce que** la couche de renfort (31) est appliquée par adhérence sur le corps de boîtier.

5. Capteur de température selon la revendication 4, **caractérisé en ce que** le fil de raccordement (23a) du premier élément de sonde de température est entouré d'une masse d'enrobage dans la zone de la platine (25).

6. Capteur de température selon l'une des revendications précédentes, **caractérisé en ce qu'**est disposé dans la chambre de boîtier un premier corps élastique (21) destiné à guider le fil de raccordement (23).

7. Capteur de température selon la revendication 5, **caractérisé en ce qu'**est disposé dans la chambre de boîtier un deuxième corps élastique (22), lequel s'appuie sur le premier corps élastique (21) et/ou sur une paroi du boîtier (1), et lequel exerce une force de rappel sur la platine (25) enclenchée.

8. Capteur de température selon la revendication 5 ou 6, **caractérisé en ce que** le premier corps élastique (21) est prévu pour réduire les contraintes thermiques et mécaniques du fil de raccordement (23) en cas de charge de traction.

9. Capteur de température selon l'une des revendications précédentes, **caractérisé en ce que** la chambre de boîtier comporte une masse d'enrobage, les éléments de sonde de température étant disposés sans masse d'enrobage dans la chambre de boîtier.

10. Capteur de température selon l'une des revendications précédentes, **caractérisé en ce que** le premier et le deuxième corps (21, 22) sont des corps en silicone.

11. Capteur de température selon l'une des revendications précédentes, **caractérisé en ce que** la platine (25) présente un premier nombre d'évidements de matière, notamment des trous, destinés au raccordement de fils et/ou de câbles, et un deuxième nombre d'évidements de matière, notamment des trous, destinés à réduire la dilatation thermique de la platine (25).

12. Capteur de température selon la revendication 11, **caractérisé en ce que** les évidements de matière, notamment les trous, sont disposés dans les bandes de cuivre disposées sur la platine (25).

13. Capteur de température selon l'une des revendications précédentes, **caractérisé en ce que** le capteur de température est conçu en tant qu'appareil de mesure à 4 fils.

14. Débitmètre thermique comprenant un capteur de température selon l'une des revendications précédentes, ainsi qu'une unité d'exploitation.
